# EUROPÄISCHE PATENTSCHRIFT

(11) **EP 1 656 218 B1**
(45) Veröffentlichungstag und Bekanntmachung des Hinweises auf die Patenterteilung: **14.04.2010**
(21) Anmeldenummer: 04738823.6
(22) Anmeldetag: 30.06.2004
(51) Int. Cl.: B07C 3/08, G06Q 10/00

(54) **VERFAHREN SOWIE VORRICHTUNG ZUR BEARBEITUNG VON AUF POSTSENDUNGEN BEFINDLICHEN GRAPHISCHEN INFORMATIONEN**
METHOD AND DEVICE FOR PROCESSING GRAPHICAL INFORMATION FOUND ON POSTAL DELIVERIES
PROCEDE ET DISPOSITIF POUR TRAITER DES INFORMATIONS GRAPHIQUES SE TROUVANT SUR DES ENVOIS POSTAUX

(30) Priorität: 11.08.2003 DE 10337164
(43) Veröffentlichungstag der Anmeldung: 17.05.2006
(73) Patentinhaber: Deutsche Post AG, 53113 Bonn (DE)
(72) Erfinder: DELITZ, Alexander, 53177 Bonn (DE); ROBEL, Elke, 53225 Bonn (DE); STUMM, Dieter, 26629 Grossefehn (DE)
(74) Vertreter: Jostarndt, Hans-Dieter
(86) Internationale Anmeldenummer: PCT/DE2004/001377
(87) Internationale Veröffentlichungsnummer: WO 2005/014189

(56) Entgegenhaltungen:
- WO-A-02/082235
- US-B1- 6 508 365

## Beschreibung

### Technisches Gebiet

Die Erfindung betrifft ein Verfahren zur Bearbeitung von auf Postsendungen befindlichen graphischen Informationen, wobei die graphischen Informationen erfasst, gespeichert und ausgewertet werden.

Die Erfindung betrifft ferner eine für die Durchführung des Verfahrens geeignete Vorrichtung.

### Stand der Technik

Die deutsche Offenlegungsschrift DE 101 50 457 A1 beschreibt ein Verfahren sowie eine Vorrichtung zur Bearbeitung von auf Oberflächen von Postsendungen befindlichen graphischen Informationen. Hierzu werden die auf den Postsendungen befindlichen graphischen Informationen erfasst und lokal durch eine Bildverarbeitungsstation ausgewertet, wobei überprüft wird, ob die erfassten graphischen Informationen von erwarteten graphischen Informationen abweichen. Im Falle einer Abweichung der erfassten von den erwarteten graphischen Informationen werden die erfassten graphischen Informationen an eine zentrale Bildverarbeitungseinheit übermittelt. In Abhängigkeit von der Überprüfung erfolgt eine physikalische Sortierung der Postsendungen.

Ein weiteres gattungsgemäßes Verfahren sowie eine gattungsgemäße Vorrichtung wird in der Deutschen Offenlegungsschrift DE 101 50 464 A1 beschrieben, wobei das Verfahren sowie die Vorrichtung insbesondere zur Freimachungsprüfung eingesetzt werden. Zur Umsetzung der Freimachungsprüfung werden die auf den Postsendungen befindlichen Freimachungsvermerke erfasst und überprüft.

Die Deutsche Offenlegungsschrift DE 101 31 254 A1 offenbart ein Verfahren zum Überprüfen der Echtheit eines auf einer Postsendung aufgebrachten Freimachungsvermerks, wobei in dem Freimachungsvermerk enthaltene kryptographische Informationen entschlüsselt und zur Überprüfung der Echtheit des Freimachungsvermerkes eingesetzt werden. Ferner beschreibt die Deutsche Offenlegungsschrift den Einsatz einer Datenbank zur Speicherung von sendungsbildspezifischen Daten. Hierbei werden insbesondere Kundensystemidentifikationsangaben in der Datenbank erfasst.

Die Deutsche Patenschrift DE 100 10 241 C1 beschreibt ein Verfahren und eine Vorrichtung zum Lesen von Adressen von Sendungen. Die Erfindung betrifft das Lesen der Adressen von Sendungen, bei dem von mindestens einer OCR-Einheit ausgewertete Abbilder der Sendungsoberfläche im Falle eines nicht eindeutigen Leseergebnisses (auch Zurückweisung genannt) mehreren Videokodierplätzen zur manuellen Kodierung, durch Videokodierkräfte, zugeführt werden.

Die Deutsche Offenlegungsschrift DE 101 50 455 A1 offenbart ein Verfahren und eine Vorrichtung zum Bearbeiten von Postsendungen, das überprüft, ob die Sendung eine Freimachung aufweist. Falls keine Freimachung vorhanden ist, oder falls die Freimachung von einer erwarteten Freimachung abweicht, wird ein Entgeltsicherungscode auf die Postsendung gedruckt. Der anschließende Sortiervorgang erfolgt in Abhängigkeit vom Entgeltsicherungscode.

Die Deutsche Patentschrift DE 199 47 259 C1 beschreibt ein Verfahren zum Sortieren von Sendungen in mehreren Sortierläufen. Um nicht in jedem Sortierlauf die Adressen lesen und auch keine maschinenlesbare Identifikationscodes auf jede Sendung aufdrucken zu müssen, werden zusätzlich beim ersten Sortierlauf charakteristische Merkmale der Sendungen ermittelt und zusammen mit den im Leseprozess ermittelten Verteilcodes gespeichert. Bei den folgenden Sortierläufen werden nur noch die charakteristischen Merkmale der Sendungen gemessen und mit den gespeicherten Merkmalen verglichen. Bei Übereinstimmung wird der Sendung der zugehörige Verteilcode zugeordnet.

Die vorgenannten Verfahren sowie Vorrichtungen verbindet das Ziel, die Postsendungen auf ordnungsgemäße Freimachung zu prüfen und nur ordnungsgemäß frankierte Postsendungen zu befördern. Nachteilig bei allen vorgenannten Erfindungen ist die Tatsache, dass die physikalische Sortierung einer endlichen Anzahl an vorbestimmten Sortiermerkmalen unterliegt, wobei jeder erfasste Freimachungsbetrugsfall einem der möglichen Sortiermerkmale untergeordnet wird.
Lässt sich ein neuartiges Betrugsmuster nicht einem der Sortiermerkmale unterordnen, wird die betroffene Postsendung aus dem Beförderungskreislauf genommen, ohne dass eine Ergänzung der Sortiermerkmale an dieses neue Betrugsmuster angepasst werden kann, was ein deutlicher Nachteil der bekannten Verfahren ist. Ein weiterer Nachteil der bekannten Verfahren besteht insbesondere darin, dass jede Postsendung auch im wiederholten Betrugsfall einen kompletten Freimachungsprüfungszyklus durchläuft, was zulasten der Beförderungsgeschwindigkeit aller Postsendungen geht.

Zudem beschreibt die internationalen Patentanmeldung WO 02/0822235 ein System zur Bearbeitung von Waren, die von Kunden an einen Händler zurückgesendet werden. Dabei werden zunächst ein Abbild der Oberfläche der die Waren enthaltenden Pakete sowie deren Gewicht erfasst und in einer Datenbank gespeichert. Anhand dieser Daten wird das zu zahlende Porto ermittelt und mit dem auf die Pakete aufgebrachten Porto verglichen, um Berichte darüber zu erstellen, in welche Höhe das Porto von dem Händler nachzuzahlen ist. Zur Erstellung geeigneter Gruppierungen von Abbildern für die Bearbeitung kann dabei eine Sortierung der Abbilder erfolgen.

### Darstellung der Erfindung

Der Erfindung liegt die Aufgabe zugrunde, ein gattungsgemäßes Verfahren so weiter zu entwickeln, dass Postsendungen eines Sortierprozesses in einem Briefverteilzentrum oder mehreren Briefverteilzentren bearbeitet werden, wobei Sortierprozesse infolge eines Bearbeitungsergebnisses verzögerungsfrei optimiert werden. Hierdurch werden Betrugsfälle, beispielsweise durch gefälschte Freimachungsvermerke, unterbunden und beliebige Betrugsmuster erkannt.

Diese Aufgabe wird bei einem gattungsgemäßen Verfahren erfindungagemäß dadurch gelöst, dass infolge eines ersten Ergebnisses der Auswertung der graphischen Informationen eine Datenbank um zusätzliche Sortiermerkmale ergänzt wird, wobei die in den graphischen Informationen enthaltenen Videodaten der Oberfläche und/oder die statistische Auswertung abgebildet werden, und wobei ferner anhand der ergänzten Datenbank eine Bestimmung eines zweiten Ergebnisses der Auswertung erfolgt, sodass infolge der Ergebnisse der Auswertung die graphischen Informationen einer ersten Postsendung sortiert werden, wobei mittels der Sortierung der graphischen Informationen der ersten Postsendung eine physikalische Sortierung einer zweiten Postsendung ausgelöst wird, und dass ferner eine weitere aus einem Leitcode resultierende physikalische Sortierung der ersten Postsendung erfolgt.

Insbesondere ist das Verfahren für die Auswertung von graphischen Informationen in Brief- oder Frachtzentren geeignet.

Vorzugsgemäß ermöglicht das erfindungsgemäße Verfahren eine Ermittlung von auf den Postsendungen befindlichen Freimachungen.
Vorteilhafte Weiterbildungen des Verfahrens sind Gegenstand der Ansprüche 2 bis 27.

Die erfindungsgemäße Auswertung der graphischen Informationen der Postsendungen wird im Folgenden mit dem Begriff "*virtuelle Feinsortierung"* (virtuelle FS) abgekürzt. Der Ausdruck virtuell wird verwendet, um auszudrücken, dass die in Verbindung stehende Sortierung nicht physikalisch erfolgt, obgleich die virtuelle FS eine physikalische Sortierung bestimmt. Grundsätzlich ermöglicht die virtuelle FS mit dafür geeigneten Mitteln eine Sortierung von Postsendungen in graphischer und/oder numerischer Ausgestaltung, so dass insbesondere graphische Informationen von Postsendungen sortiert werden. Da die virtuelle FS eine weitere Freimachungsprüfung - im Folgenden virtuelle Freimachungsprüfung genannt - umfasst, wird eine unbeabsichtigte entgeltfreie Beförderung erfindungsgemäß ausgeschlossen.

Grundsätzlich kann die virtuelle FS an jedem beliebigen Punkt des Beförderungszyklus von Postsendungen innerhalb oder außerhalb von Brief- oder Frachtzentren eingebracht werden.

Der erfindungsgemäße Ausdruck "virtuell" bezieht sich ferner auf ein Verfahren zur computergestützten Auswertung der graphischen Informationen, wobei vorzugsgemäß standardisierte computergestützte Auswerteverfahren eingesetzt werden. Erfindungsgemäß hat es sich darüber hinaus als besonders vorteilhaft erwiesen, speziell für den Beförderungszyklus eines Brief- oder Frachtzentrums optimierte Auswerteverfahren einzusetzen.

Der Begriff "Computer" ist in keiner Weise einschränkend zu verstehen. Es handelt sich hierbei um eine beliebige zur Durchführung von Berechnungen geeignete Einheit, beispielsweise eine Workstation, einen Personalcomputer oder einen Mikrocomputer.

Eine graphische Information ist die auf der Oberfläche der Postsendung befindliche Information jedweder Natur, welche einer graphischen Abbildung oder Erfassung zugänglich ist. Es hat sich gezeigt, dass sich der Begriff der graphischen Informationen in erster Linie auf den Freimachungsvermerk sowie das Absenderfeld der Postsendung bezieht. Darüber hinaus sind auch Videodaten der gesamten Oberfläche der Postsendungen ein Teil der graphischen Informationen, so dass auch Detailinformationen einer Postsendung erfasst werden können. Ferner ist auch die Leitcodierung, die Angaben über das Ergebnis einer bereits durchgeführten Auswertung enthält, Bestandteil der graphischen Informationen. Nach erfolgter Erfassung werden die graphischen Informationen gespeichert, so dass die virtuelle FS von den gespeicherten Daten Gebrauch machen kann.

Ergebnisse einer automatisierten Freimachungsprüfung, einer Konkretisierung, in welches Sortierfach die Postsendung gelangt, werden in Form eines ein- oder zweidimensionalen Barcodes, auch Entgeltsicherungscode (ESi-Code) genannt, auf die Postsendung gedruckt. Dieser, auf der Postsendung befindliche ein- oder zweidimensionale Barcode ist ein Beispiel einer Leitcodierung.

Die automatisierte Freimachungsprüfung wird erfindungsgemäß so gestaltet, dass ordnungsgemäß frankierte Postsendungen mit vollständiger Leitcodierung in einen normalen Beförderungslauf gehen, ohne in einer Datenbank ZinS erfasst zu werden.

In der Datenbank ZinS werden sendungsbezogene Daten für die optimierte Unterstützung von Bearbeitungspozessen gespeichert.

Mittel hierfür ist eine erweiterte Nutzung der Automatisierung in den Briefzentren, um so detaillierte Informationen zu automatisch bearbeiteten Sendungen zu gewinnen. Ein Ergebnis ist die zusätzliche Aussteuerung von Sendungen in "Entgeltsicherungs-Fächer".

Grundsätzlich enthält ZinS Angaben von automatisierten und virtuellen Freimachungsprüfungen sowie Angaben der mit den Freimachungsprüfungen in Verbindung stehenden Sortierungen. Ferner werden Ergebnisse einer Auswertung von grafischen Informationen in ZinS gespeichert. Insbesondere verfügt ZinS über eine Negativdatei, wobei die Negativdatei Angaben über unzulässige Freimachungen enthält. Ferner verfügt ZinS über eine Positivdatei, die Informationen über ordnungsgemäße Freimachungen enthält.

Liegt keine vollständige Leitcodierung der Postsendung vor, wird auf Basis der automatisierten Freimachungsprüfung eine Leitcodierung aufgedruckt, die eine angegliederte physikalische Sortierung der Postsendungen bestimmt. Die physikalische Sortierung als Ergebnis der automatischen Freimachungsprüfung erfolgt beispielsweise nach den Sortiermerkmalen "Unterfrankierung" und "Fälschungsverdacht".

Ferner wird der innerhalb eines vorgebbaren Zeitintervalls registrierte kundenspezifische kumulierte Freimachungsbetrag sowie der kundenspezifische kumulierte Betrag aller bezahlten Wertkarten/Wertvorgaben in ZinS registriert. Darüber hinaus ermittelten kundenspezifisch kumulierten Freimachungsbeträgen sowie den kundenspezifisch kumulierten Beträgen aller bezahlten Wertkarten/Wertvorgaben und den in einem Berichtszeitraum gelesenen Beträgen einer automatischen Freimachung anhand von erfassten Absenderfreistempelmaschinen (AFM) Kennungen.

Erfindungsgemäß obliegt die Auswertung der graphischen Informationen nicht zuvor bestimmten Sortiermerkmalen, vielmehr ergeben sich aus einer virtuellen FS zusätzliche Sortiermerkmale für zukünftige Fälle von Freimachungsbetrug. Insbesondere werden die Ergebnisse der virtuellen FS zur Ergänzung von ZinS, beziehungsweise zur Ergänzung der Negativdatei, verwendet. Das erfindungsgemäße Verfahren sowie die Vorrichtung tragen somit dem Umstand Rechnung, dass sich Fälscher von Freimachungsvermerken immer ausgefeilterer Methoden bedienen.

Die graphischen Informationen, insbesondere die Videodaten der Oberfläche der Postsendungen werden nach erfolgter Erfassung gespeichert und stehen der Auswertung zur Verfügung. Vorzugsgemäß werden die graphischen Informationen visualisiert. Die Speicherung der graphischen Informationen weist den erheblichen Vorteil auf, zukünftige kundenspezifische Dokumentationen über beförderte Postsendungen ziel- und zeitgerecht ausführen zu können. Die Art der Auswertung kann erfindungsgemäß an die Erfordernisse innerhalb des Brief- oder Frachtzentrums angepasst werden.

Ferner weist die Speicherung der graphischen Informationen den erheblichen Vorteil auf, die Auswertung der gespeicherten Informationen selbst während betrieblich bedingter Abschaltphasen des Beförderungssystems zu ermöglichen. Hierdurch wird die Auswertung der graphischen Informationen von der Beförderung der Postsendungen entkoppelt und so bleibt vorteilhafterweise die Auswertegeschwindigkeit der Postsendungen auch in Abschaltphasen erhalten, wodurch eine zeitgerechte Beförderung der Postsendungen erheblich begünstigt wird.

In einer besonders bevorzugten Ausführungsform der Erfindung werden neben den graphischen Informationen noch Daten der automatisierten Freimachungsprüfung gespeichert.

Wird beispielsweise mittels des ersten Ergebnisses der Auswertung der graphischen Informationen der ersten Postsendung ein unzulässiger Freimachungsvermerk erkannt, wird die Negativdatei von ZinS entsprechend der Sortierung der graphischen Informationen aktualisiert. Eine weitere automatisierte und/oder virtuelle Freimachungsprüfung macht von der aktualisierten Negativdatei Gebrauch. Im Betrugsfall lassen sich so Umsatzanalysen für Kundensegmente, Einzelkunden oder Mängelstrukturen einfach erzielen, ohne in die leitcodierungsbasierte physikalische Sortierung der ersten Postsendung einzugreifen.

Grundsätzlich können beliebige Leitcodierungen eingesetzt werden. Als besonders vorteilhaft hat sich der Einsatz von 2-stelligen Leitcodierungen erwiesen. Der Einsatz einer derartigen Leitcodierung dient weiteren Auswerteschritten. Außerdem ermöglicht das Aufbringen einer Leitcodierung sicherzustellen, dass eine Postsendung nur einmal einer Freimachungsprüfung unterzogen wird und/oder nur ein einziges Mal in ein Erfassungssystem befördert wird. Zur Vermeidung von Doppelerfassungen wird beispielsweise zu Beginn der Auswertung der graphischen Informationen eine physikalische Grobsortierung vorgenommen.

Im Falle eines zweiten Betrugsfalls mit zuvor erfasstem Betrugsmuster werden auf Basis der zuvor gewonnenen Auswerteergebnisse der virtuellen FS die unzulässig freigemachten Postsendungen physikalisch aussortiert, ohne an vorbestimmte Sortiermerkmale gebunden zu sein. Dieser weitere Vorteil des erfindungsgemäßen Verfahrens führt zur Registrierung und Erkennung eines beliebigen Betrugsmusters, was eine außerordentlich hohe physikalische Aussortierungsrate zur Folge hat.

Es hat sich als besonders zweckdienlich gezeigt, die Auswertung der graphischen Informationen mittels einer Datenleitung zu einem anderen Zeitpunkt und/oder an einem anderen Ort stattfinden zu lassen, als zu dem Zeitpunkt und/oder an dem Ort der aus der Leitcodierung resultierenden physikalischen Sortierung.

Unter Datenleitung im Sinne des besonders bevorzugten Ausführungsbeispiels der Erfindung ist jedes Medium zum verlustfreien Übertragen von Daten zu verstehen. Beispielsweise können RS 232 Kabel oder Koaxial-Kabel als Datenleitung eingesetzt werden, so dass in diesen Fällen ein Datentransport mit Geschwindigkeiten von bis zu 100 Mbps (Mega bit per second) erzielt wird.

In einer weiteren bevorzugten Ausführungsform beinhaltet die Auswertung der graphischen Informationen der Postsendungen statistische Auswertungen der auf den Postsendungen befindlichen graphischen Informationen.
Vorteilhafterweise liefert die statistische Auswertung der auf den Postsendungen befindlichen graphischen Informationen ein zusätzliches Entscheidungskriterium zur Freimachungsprüfung, da die Freimachungsprüfung in diesem Fall nicht auf eine tatsächliche Klassifizierung nach vorbestimmten Sortiermerkmalen limitiert ist. Hierzu werden anhand der graphischen Informationen die Videodaten der Oberfläche und/oder die statistische Auswertung abgebildet und dienen zur Bestimmung eines zweiten Ergebnisses der Auswertung, wobei das zweite Ergebnis der Auswertung zur Aktualisierung von ZinS dient.

Auf Basis der graphischen Informationen erfolgt eine Ermittlung von Freimachungsarten der Postsendungen, die zur Bestimmung eines weiteren Ergebnisses der Auswertung dient, wobei Ergebnisse der Ermittlung der Freimachungsart in Form eines Codes ausgegeben werden.

Grundsätzlich kann jede Ausgestaltung des Freimachungsvermerkes erfasst werden, es hat sich jedoch als besonders vorteilhaft erwiesen, durch AFM erzeugte Freimachungsvermerke oder computerbasierte, digitale, Freimachungsvermerke zu erfassen und auszuwerten.

Besonders zweckmäßig ist eine Erfassung aller Freimachungsabdrucke eines durch eine AFM erzeugten Freimachungsvermerks, wobei der Freimachungsvermerk insbesondere die AFM-Kennung sowie das Erstellungsdatum des Freimachungsvermerkes enthält.

Eine Echtheitsprüfung einer Absenderfreimachung erfolgt dadurch, dass die auf den Postsendungen vorhandenen graphischen Informationen mit den für diese Postsendung erwarteten Informationen verglichen werden, wobei die erwarteten Informationen einer dem Vergleich vorhergehenden Festlegung entsprechen, und ferner im Falle eines Abweichens der vorhandenen Informationen von den erwarteten Informationen, die Freimachung als gefälscht registriert wird.

Vorzugsgemäß ergeben sich Festlegungen aus einer dem Vergleich vorhergehenden Auswertung von Postsendungen, wobei die Auswertung eine sich verändernde Anzahl von Sortiermerkmalen nach sich zieht.

Grundsätzlich verfügt die virtuelle Freimachungsprüfung über mindestens die gleiche Anzahl an Sortiermerkmalen wie die automatisierte Freimachungsprüfung.

Vorzugsgemäß weist die virtuelle Freimachungsprüfung eine Reihe weiterer Sortiermerkmale auf. Beispielsweise ist ein weiteres Sortiermerkmal die durch die Auswertung ermittelte AFM-Kennung ("Kennung"). Zudem wird infolge eines weiteren Sortiermerkmals überprüft, ob eine AFM-Kennung lesbar ist ("AFM-Kennung nicht lesbar"). Ferner wird infolge eines Sortiermerkmals überprüft, ob eine ermittele AFM-Kennung in einer Negativdatei vorhanden ist ("AFM in Negativdatei"). Ebenso wird infolge eines Sortiermerkmals überprüft, ob eine ermittele AFM-Kennung in einer Positivdatei ist ("AFM nicht in Positivdatei"). Zudem wird infolge eines Sortiermerkmals überprüft, ob eine AFM Unterfrankierung vorliegt ("AFM Unterfrankierung"). Auf Grundlage weiterer Sortiermerkmale wird geprüft ob eine AFM Währung lesbar ist ("AFM Währung nicht lesbar"), und ob ferner eine AFM Freimachung lesbar ist ("AFM Freimachung nicht lesbar").

Die digitalen Freimachungsvermerke enthalten kryptographische Informationen, beispielsweise über die Identität des die Erzeugung des Freimachungsvermerkes steuernden Kundensystems. Die Entschlüsselung der in dem Freimachungsvermerk enthaltenen kryptographischen Informationen ist Teil der Auswertung der graphischen Informationen. Durch die Integration der Entschlüsselung der kryptographischen Informationen in den Auswerteprozess ist es möglich, die Echtheit der digitalen Freimachungsvermerke unmittelbar zu erfassen.

Ferner ist es vorteilhaft, dass eine weitere Teilauswertung einen Vergleich zwischen dem Erzeugungsdatum des digitalen Freimachungsvermerks und dem aktuellen Datum beinhaltet. Die Integration des Erzeugungsdatums des digitalen Freimachungsvermerks - insbesondere in verschlüsselter Form - erhöht die Datensicherheit, da durch den Vergleich zwischen dem Erzeugungsdatum des digitalen Freimachungsvermerkes und dem aktuellen Datum eine mehrfache Verwendung eines digitalen Freimachungsvermerks zur Beförderung von Postsendungen vermieden wird.

Wegen der bevorzugten Erzeugungsart derartiger digitaler Freimachungen in Personalcomputern (PC) wird diese Freimachungsart auch als PC-Frankierung (PCF) bezeichnet. Die Ausführungen gelten jedoch auch für andere digitale Freimachungen, die beispielsweise durch geeignete Großseriendrucker oder durch für das Drucken von digitalen Freimachungsvermerken ausgestattete Freimachungsmaschinen erfolgen können.

Eine Echtheitsprüfung einer digitalen Freimachung erfolgt, indem die in den graphischen Informationen enthaltenen codierten digitalen Informationen dechiffriert und mit auf der zugehörigen Postsendung enthaltenen unverschlüsselten graphischen Informationen auf Übereinstimmung verglichen und im Falle einer Nichtübereinstimmung die Freimachung als gefälscht registriert wird.

Ferner ermöglicht ein bevorzugtes Ausführungsbeispiel der Erfindung eine weitere Freimachungsprüfung, wobei aus in den graphischen Informationen enthaltenen Daten ein Hash-Wert gebildet wird, um zu überprüfen, ob dieser Hash-Wert mit einem in den codierten Informationen enthaltenen Hash-Wert übereinstimmt und im Falle der Nichtübereinstimmung die Freimachung als gefälscht registriert wird. Hierzu wird der Hash-Wert unter Einbeziehung von Angaben über Sendungsdaten, unter Einbeziehung einer zwischengespeicherten Zufallszahl und unter Einbeziehung einer Ladevorgangsidentifikationsnummer gebildet.
Dies führt zu weiteren Sortiermerkmalen der virtuellen Freimachungsprüfung. Insbesondere wird infolge eines weiteren Sortiermerkmals überprüft, ob der Hash-Wert der PCF ordnungsgemäß ist ("PCF Hashwert nicht o.k."). Ferner werden durch weitere Sortiermerkmale Überprüfungen eines Datums einer PCF ("PCF Datum) , Überprüfungen einer PCF Version ("PCF Version"), Überprüfungen einer PCF Unterfrankierung ("PCF Unterfrankierung") und/oder Überprüfungen auf das Vorhandensein einer ermittelten PCF in einer Negativdatei ("PCF in Negativdatei") vorgenommen.

Neben den vorgenannten Sortierungsmerkmalen der Freimachungsprüfungen erfolgt die Auswertung der graphischen Informationen der Postsendung nach weiteren Sortiermerkmalen, so dass eine weitere Strukturierung der Auswertung resultiert.

Beispielsweise ist ein Sortiermerkmal der Auswertung eine Uhrzeit eines Sortierungsereignisses, was eine retrospektive Analyse einer bereits beförderten Postsendung ermöglicht.

Ein weiteres Sortiermerkmal der Auswertung ist das Datum eines Sortierungsereignisses. Hierdurch lassen sich vorteilhafterweise registrierte Betrugsfälle dem Registrierungsdatum unterordnen, was Rückbezüglichkeiten und somit Erkennung von Tendenzen von Betrugsereignissen über einen längeren Zeitraum ausbildet.

Ferner sind weitere Sortiermerkmale der Auswertung eine Startzeit und/oder eine Endzeit eines Sortierungsereignisses. Durch die bevorzugte Angabe eines Zeitintervalls in Form von Start- und Endzeiten eines Sortierungsereignisses findet eine exakte zeitliche Aufspaltung der virtuellen FS statt, was ferner Rückschlüsse über Koinzidenzen der Beförderungsprozesse von Postsendungen ermöglicht.

Ein weiteres Sortiermerkmal der Auswertung ist eine Spezifikation von Produktionsmaschinen eines Brief- oder Frachtverteilzentrums anhand einer Maschinennummer, so dass eine globale Einbeziehung aller am Beförderungsprozess beteiligten Systeme erfolgt und dokumentiert wird.

Weitere Sortiermerkmale sind der durch die Auswertung ermittelte Wert der Unterfrankierung sowie die durch die Auswertung ermittelte AFM-Kennung.

In einer weiteren bevorzugten Ausführungsform der Erfindung befindet sich mindestens ein Mittel zur Auswertung der graphischen Informationen der Postsendungen innerhalb und/oder außerhalb eines Briefverteilungszentrums.
Mittels einer räumlichen Trennung von Auswertung und Beförderung wird es einem Anwender des Verfahrens freigestellt, eine Freimachungsprüfung in unmittelbarer Nähe zur Beförderung oder in räumlicher Distanz durchzuführen. Beispielsweise kann die Auswertung der graphischen Informationen von Anwendern an jedem beliebigen Ort erfolgen, insofern das Mittel zur Auswertung ein Bestandteil des Datennetzwerks ist.

Hierdurch lassen sich insbesondere spezielle Anwendergruppen schaffen, deren gezielte räumliche Konzentrierung abseits der Beförderung der Postsendungen eine erhebliche Steigerung der Auswerteeffizienz zur Folge hat.

Ferner wird die vorgenannte Aufgabe in Verbindung mit einer Vorrichtung, im Folgenden "*virtuelle Feinsortiermaschine*" (virtuelle FSM) genannt, entsprechend dem Oberbegriff des Patentanspruchs 28 erfindungsgemäß dadurch gelöst, dass das Datennetzwerk mit mindestens einem Mittel zur Erzeugung einer physikalischen Sortierung von Postsendungen, mit mindestens einem Mittel zur Erzeugung einer Leitcodierung, und mit mindestens einem Mittel zur Auswertung der graphischen Informationen verbunden ist, sodass das Mittel zur Auswertung der graphischen Informationen einer ersten Postsendung ein erstes Ergebnis der Auswertung bestimmt, wobei das Datennetzwerk ferner mit einer um zusätzliche Sortiermerkmale ergänzten Datenbank zur Bestimmung eines zweiten Ergebnisses der Auswertung verbunden ist und zudem mindestens ein Mittel zur Erzeugung der physikalischen Sortierung einer zweiten Postsendung aktiviert wird, wobei eine weitere aus dem Leitcode resultierende physikalische Sortierung der ersten Postsendung erfolgt.
Vorteilhafte Weiterbildungen der Vorrichtung sind Gegenstand der Ansprüche 29 bis 33.

Im Sinne der erfindungsgemäßen virtuellen FSM wird ein Datennetzwerk durch ein komplexes System an Daten verarbeitenden Mitteln und den die Daten verarbeitenden Mitteln verbindenden Datenleitungen beschrieben, wobei sich ein Netzwerk durch seine Konfiguration von einem weiteren Netzwerk unterscheiden kann.

Das Datennetzwerk erlaubt die Verknüpfung mehrerer Daten verarbeitender Mittel. Vorzugsweise sind zentrale Speicher, Drucker, Daten-Scanner miteinander verbunden und können benutzt werden. Als besonders vorteilhaft im Sinne der erfindungsgemäßen Vorrichtung hat sich der Einsatz von unterschiedlichen Netzwerksarten zum Datentransport erwiesen. Beispielsweise werden lokale Netzwerke (LANs), überregionale Netzwerke auf Basis von Telefonverbindungen (WANs), homogenen Datennetzwerken (Netzwerke mit gleichartigen Rechnern und Software) und heterogenen Datennetzwerken (Netzwerke mit verschiedenartigen Rechnern und Software) erfindungsgemäß eingesetzt. Ebenso ist es möglich, einzelne oder alle der vorgenannten Netzwerkarten miteinander zu kombinieren.
Ferner wird in einer besonders bevorzugten Ausführungsform der virtuellen FSM ein Datentransport über einen Datenserver ermöglicht.

Das Mittel zur Erzeugung der physikalischen Sortierung von Postsendungen zeichnet sich erfindungsgemäß dadurch aus, dass die Anzahl an Sortierfächern mindestens der Anzahl der aus der Leitcodierung resultierenden Sortiermerkmale entspricht. Vorteilhafterweise stellt das Mittel zur Erzeugung der physikalischen Sortierung weitere Sortierfächer bereit, wobei die Anzahl an weiteren Sortierfächern durch die Ergebnisse der virtuellen FS bestimmt ist.

Erfindungsgemäß wird das Mittel zur Erzeugung der Leitcodierung dergestalt ausgelegt, dass die graphischen Informationen einer jeden in einem Postverteilungszentrum befindlichen, zur Weiterbeförderung bereitstehenden, Postsendung durch mindestens ein Einlesemittel analog und/oder digital erfasst werden. Die erfindungsgemäße Erfassung der graphischen Informationen führt somit zu einer analogen und/oder digitalen Repräsentation der Oberflächen der Postsendungen. Die erfassten Repräsentationen der Oberflächen werden durch mindestens ein Mittel zur Speicherung von analogen oder digitalen Signalen gespeichert, wobei die Speicherung grundsätzlich unabhängig vom Ort der Erfassung ist.

Das Einlesemittel besteht aus einer Kombination von Codeleseeinheit zum Einlesen des Frankierungsvermerkes und einer Videodatenaufnahmeeinheit zur Erzeugung einer Videoaufnahme der gesamten Postsendungsoberfläche. Ferner kann wahlweise das Einlesemittel aus zwei physikalisch getrennten Einheiten bestehen, wobei eine Einheit zum Lesen des Frankierungsvermerkes und die weitere Einheit zur Videodatenaufnahme der Oberfläche der Postsendung dient.

Es hat sich als vorteilhaft erwiesen, anhand von spezialisierten Lesevorrichtungen eine Zuordnung der graphischen Informationen zu standardisierten Freimachungssystemen vorzunehmen.

Beispielsweise dechiffriert die spezialisierte Lesevorrichtung die in den graphischen Informationen enthaltenen codierten Angaben und vergleicht diese decodierten Angaben mit weiteren Informationen einer Datenbank.

Erfindungsgemäß kann das Mittel zur Auswertung der graphischen Informationen mit dem Mittel zur Erzeugung der Leitcodierung kombiniert werden.
Vorzugsweise wird das Mittel zur Auswertung der graphischen Informationen mit dem Datennetzwerk dergestalt verbunden, dass eine räumliche und funktionale Entkopplung zum Mittel zur Erzeugung der Leitcodierung hergestellt wird.

Eine weitere Ausführungsform der virtuellen FSM zeichnet sich dadurch aus, dass mindestens ein Mittel zur Auswertung der graphischen Informationen der Postsendungen über mindestens ein Eingabegerät sowie über mindestens ein Anzeigegerät verfügt, so dass Auswerteergebnisse sowie Videodaten der Oberflächen der Postsendungen einem Anwender dargestellt und mittels des Eingabegeräts vom Anwender nachbearbeitet werden.

Es ist ein weiteres Merkmal der virtuellen FSM, je nach baulicher Ausführungsart unterschiedliche Anzeigegeräte zur Darstellung der Auswerteergebnisse sowie der Videodaten einzusetzen. Beispielsweise können konventionelle analoge und/oder digitale Videotechniken als Anzeigegeräte verwendet werden. Ferner können PC-basierte Anzeigegeräte eingesetzt werden, die eine Filterung der Videodaten und somit eine Detaildarstellung spezieller Segmente der Videodaten ermöglichen.

Das Eingabegerät ist eine Schnittstelle zur Repräsentierung und Übertragung von Informationen. Beispielsweise werden PC-Tastaturen, numerische Tastenblöcke, Barcode-Scanner, Mittel zur Sprachanalyse usw. zur Eingabe verwendet.

Weitere Vorteile, Besonderheiten und zweckmäßige Weiterbildungen der Erfindung ergeben sich aus den Unteransprüchen und der nachfolgenden Beschreibung bevorzugter Ausführungsbeispiele der Erfindung anhand von Zeichnungen.

### Beschreibung der Zeichnungen

Von den Zeichnungen zeigt:
Figur 1: Darstellung des erfindungsgemäßen Verfahrens anhand eines schematisierten Ablaufdiagramms.
Figur 2: Beispielhafte Darstellung der erfindungsgemäßen Anzeige von Auswerteergebnissen, aufgegliedert nach Sortiermerkmalen.
Figur 3: Beispielhafte Darstellung der virtuellen Fachmengen nach erfolgter Auswertung unter Berücksichtigung von AFM und PCF Datensätzen.
Figur 4: Beispielhafte Darstellung der erfindungsgemäßen Anzeige von Auswerteergebnissen sowie von Details der graphischen Informationen.

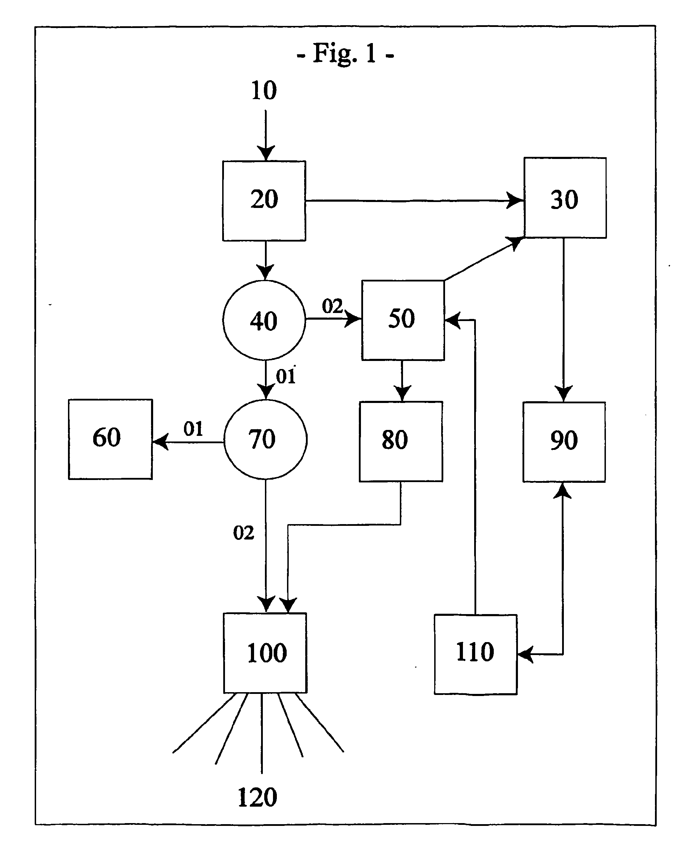

Figur 1 zeigt eine Darstellung eines bevorzugten Ausführungsbeispiels der Erfindung zur Bearbeitung von auf Postsendungen befindlichen graphischen Informationen in Form eines Ablaufdiagramms.

Die auf Postsendungen, schematisiert in Form von Eingangsinformationen **10,** befindlichen graphischen Informationen **20** werden erfasst und einem Speicher **30** zugeführt. Der Speicher ist hierbei nicht flüchtig ausgelegt, so dass eine dauerhafte Speicherung der graphischen Informationen erfolgt. Ferner wird anhand der erfassten graphischen Informationen geprüft, ob die Leitcodierung **40** bereits vorhanden ist. Ist das Ergebnis der Prüfung des Vorhandenseins der Leitcodierung positiv **01,** wird ferner geprüft, ob eine ordnungsgemäße Frankierung vorliegt. Ist auch das Ergebnis der Prüfung auf ordnungsgemäße Frankierung positiv 01, wird die entsprechende Postsendung einem normalen Beförderungslauf **60** zugeführt.

Ist das Ergebnis der Prüfung des Vorhandenseins der Leitcodierung **40** negativ 02, erfolgt die automatisierte Freimachungsprüfung 50. Das Ergebnis der automatisierten Freimachungsprüfung legt eine Leitcodierung fest, wobei die weitere Leitcodierung **80** auf die Postsendung gedruckt wird. Entsprechend der Leitcodierung werden die Postsendungen physikalisch sortiert **100,** wobei die Sortierung entsprechend der Sortiermerkmale **120** erfolgt.

Ist auch das Ergebnis der Prüfung auf ordnungsgemäße Frankierung **70** negativ **02,** und ist bereits eine Leitcodierung vorhanden, werden die Postsendungen wiederum entsprechend der Leitcodierung physikalisch nach Sortiermerkmalen **120** sortiert.

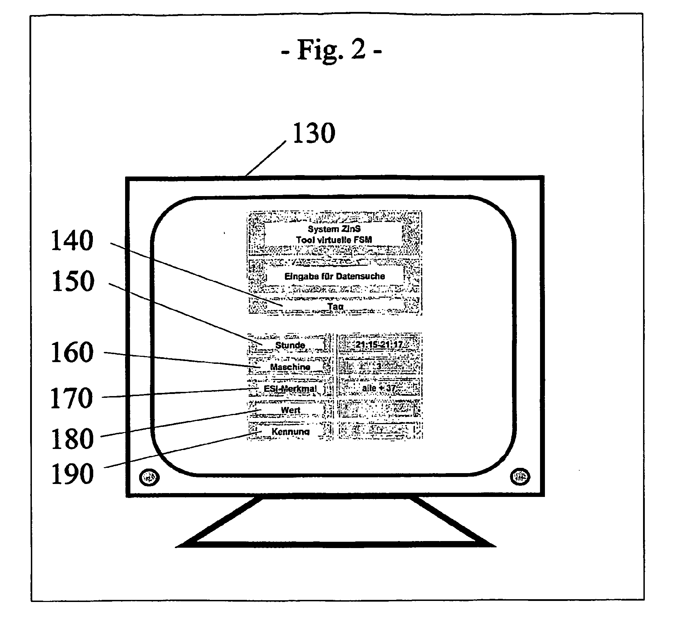

Figur 2 zeigt ein besonders bevorzugtes Ausführungsbeispiel der erfindungsgemäßen Vorrichtung anhand der nach Sortiermerkmalen aufgegliederten Anzeige von Auswerteergebnissen.

Mittels des Anzeigegerätes **130** werden anhand einer strukturierten Darbietungsform typische Auswerteergebnisse unterteilt nach Sortiermerkmalen dargestellt. Dabei werden die Ergebnisse je Tag **140,** Start- und Endzeit **150,** Maschinennummer **160,** den verwendeten ESi-Sortiermerkmalen **170,** dem ermittelten Unterfrankierungswert **180,** sowie nach ermittelter AFM-Kennung **190** aufgeführt.

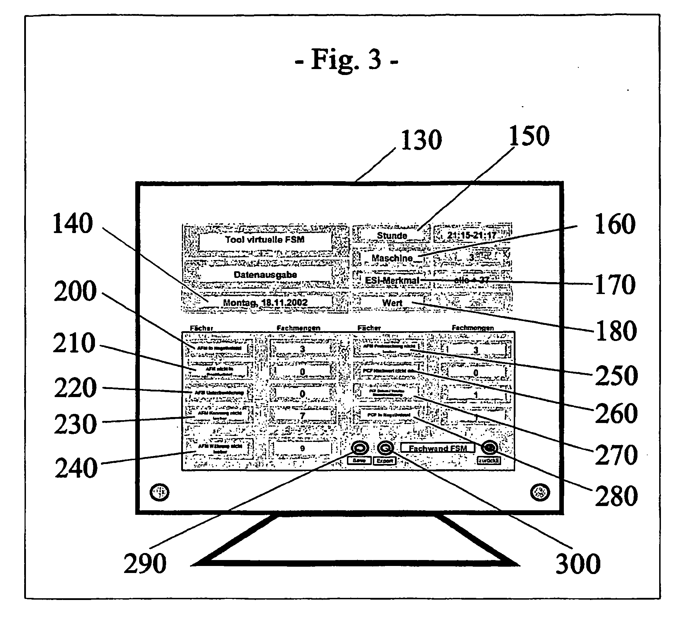

Figur 3 zeigt ein weiteres bevorzugtes Ausführungsbeispiel der Erfindung. Auf Basis der erfassten graphischen Informationen findet die Echtheitsprüfung von AFM- und PCF-Freimachungen statt, so dass die graphischen Informationen in diesem Ausführungsbeispiel graphisch - in virtuelle Fächer - sortiert werden. Die Ergebnisse der virtuellen Freimachungsprüfung **90** werden den verwendeten Sortiermerkmalen untergeordnet und auf dem Anzeigegerät 130 dargestellt. In dem durch Figur 3 dargestellten exemplarischen Fall konnte beispielsweise die folgende Anzahl an Postsendungen in die dafür vorgesehenen virtuellen Fächer sortiert werden: Bei drei Postsendungen befindet sich die ermittelte AFM-Kennung bereits in der Negativdatei, so dass deren graphischen Informationen dem virtuellen Fach "AFM in Negativdatei" **200** zugeordnet werden. Keine der ausgewerteten AFM-Kennung befand sich zuvor in der Positivdatei, so dass sich keine graphische Information im virtuellen Fach "AFM in Positivdatei" **210** befindet. Ferner konnte durch die virtuelle Freimachungsprüfung keine AFM-Unterfrankierung ermittelt werden, das virtuelle Fach "AFM Unterfrankierung" 220 beinhaltet somit keine graphischen Informationen. Allerdings konnten insgesamt sieben Postsendungen ermittelt werden, deren AFM Kennung nicht lesbar war, was zu einer Menge von 7 graphischen Informationen im virtuellen Fach "AFM Kennung nicht lesbar" **230** führt. Darüber hinaus ist bei neun Postsendungen die AFM Währung ("AFM Währung nicht lesbar" **240**) und bei 3 Postsendungen die AFM Freimachung nicht lesbar ("AFM Freimachung nicht lesbar" **250**)**.**

Weitere Ergebnisse der Auswertung zeigen, dass der Auswertung keine Postsendung mit nicht ordnungsgemäßem PCF Hashwert vorlag (keine graphische Information im Fach "PCF Hashwert nicht ok" **260**)**,** und dass ferner eine Postsendung ermittelt werden konnte, bei der ein unzulässiges PCF Datum, eine unzulässige PCF Version und/oder eine PCF Unterfrankierung vorlag. Das letzte Auswerteergebnis dieses exemplarischen Beispiels zeigt, dass sich bereits eine Postsendung in der PCF Negativdatei befand ("PCF in Negativdatei" **280**)**.** Die vorgenannte graphische Darstellung der Auswerteergebnisse ist dergestalt, dass mittels einer graphischen Aktivierung am Anzeigegerät oder mittels des Eingabegeräts alle in einem jeweiligen virtuellen Fach aufgeführten graphischen Informationen aufgelistet werden.

Das Anzeigegerät **130** ist im Falle des Ausführungsbeispiels nach Figur 3 noch mit zwei zusätzlichen Bedieneinheiten an der Frontblende versehen. Durch Betätigen der Bedieneinheit **290** werden alle Auswerteergebnisse gespeichert. Betätigung der Bedieneinheit **300** führt zu einem Datenexport aller Auswerteergebnisse auf einen externen, außerhalb des Datennetzwerks befindlichen, Datenträger.

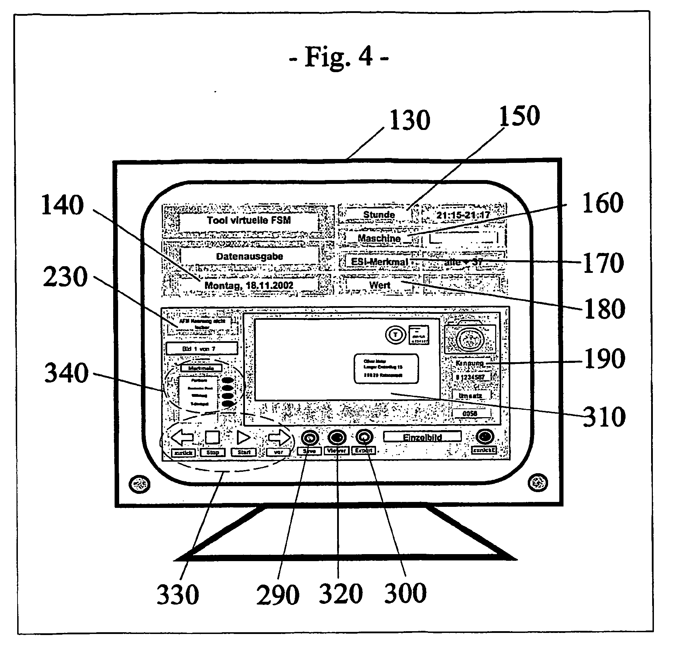

Figur 4 zeigt ein weiteres Ausführungsbeispiel anhand der erfindungsgemäßen Anzeige von Auswerteergebnissen sowie von Details der graphischen Informationen **310.** Mittels der Bedieneinheit **320** auf der Frontblende des Anzeigegeräts **130** wird die Anzeige von graphischen Informationen aktiviert. Zudem ermöglicht eine weitere Bedieneinheit **330** eine gezielte Bildverarbeitung der graphischen Informationen. Hierbei können entweder einzelne Bereiche der angezeigten graphischen Information oder wahlweise graphische Informationen von einander verschiedenen Postsendungen ausgewählt werden.

### Bezugszeichenliste

- 01: Ja
- 02: Nein
- 10: Eingangsinformation
- 20: Erfassung der graphischen Informationen
- 30: Speicher
- 40: Prüfung auf vorhandene Leitcodierung
- 50: Automatisierte Freimachungsprüfung
- 60: Normaler Beförderungslauf
- 70: Prüfung auf ordnungsgemäße Frankierung
- 80: Drucken der Leitcodierung
- 90: Virtuelle FS
- 100: Physikalische Sortierung
- 110: ZinS
- 120: Sortiermerkmale
- 130: Anzeigegerät
- 140: Datumsangabe
- 150: Start- und Endzeitangabe
- 160: Angabe der Maschinennummer
- 170: Angabe des ESi-Sortiermerkmals
- 180: Angabe des ermittelten Unterfrankierungswerts
- 190: Angabe der ermittelten AFM-Kennung
- 200: Fachmenge in Negativdatei für Postsendungen mit AFM Freimachung
- 210: Fachmenge in Positivdatei für Postsendungen mit AFM Freimachung
- 220: Fachmenge für unterfrankierte Postsendungen mit AFM Freimachung
- 230: Fachmenge für Postsendungen, deren AFM Kennung nicht lesbar ist
- 240: Fachmenge für Postsendungen, deren AFM Währung nicht lesbar ist
- 250: Fachmenge für Postsendungen, deren AFM Frei- machung nicht lesbar ist
- 260: Fachmenge für Postsendungen, deren PCF Hash- wert nicht lesbar ist
- 270: Fachmenge für Postsendungen, bei denen ein un- zulässiges PCF Datum, eine unzulässige PCF Version und/oder eine PCF Unterfrankierung er- mittelt wurde
- 280: Fachmenge für Postsendungen, deren AFM Kennung nicht lesbar ist
- 290: Bedienung zur Speicherung der Auswerteergeb- nisse der virtuellen FS
- 300: Bedienung zum Datenexport der Auswerteergeb- nisse der virtuellen FS
- 310: Darstellung der erfassten graphischen Informa- tionen
- 320: Bedienung zur Aktivierung der Darstellung der erfassten graphischen Informationen
- 330: Bedienung zur Bearbeitung der graphischen In- formationen
- 340: Freie Fläche für Werbeaufdrucke

## Patentansprüche

1. Verfahren zur Bearbeitung von auf Postsendungen befindlichen graphischen Informationen, wobei die graphischen Informationen erfasst, ausgewertet und gespeichert werden, und wobei die erfassten graphischen Informationen zur physikalischen Sortierung von Postsendungen eingesetzt werden,
wobei infolge eines ersten Ergebnisses der Auswertung der graphischen Informationen eine Datenbank um zusätzliche Sortiermerkmale ergänzt wird, wobei die in den graphischen Informationen enthaltenen Videodaten der Oberfläche und/oder die statistische Auswertung abgespeichert werden, und wobei ferner anhand der ergänzten Datenbank eine Bestimmung eines zweiten Ergebnisses der Auswertung erfolgt, so dass infolge der Ergebnisse der Auswertung die graphischen Informationen einer ersten Postsendung sortiert werden, wobei mittels der Sortierung der graphischen Informationen der ersten Postsendung eine physikalische Sortierung einer zweiten Postsendung ausgelöst wird, und wobei ferner eine weitere aus einem Leitcode resultierende physikalische Sortierung der ersten Postsendung erfolgt.

2. Verfahren nach Anspruch 1,
**dadurch gekennzeichnet,**
**dass** eine Ermittlung von auf den Postsendungen befindlichen Freimachungen erfolgt.

3. Verfahren nach einem oder mehreren der vorgenannten Ansprüche,
**dadurch gekennzeichnet,**
**dass** die Auswertung der graphischen Informationen mittels einer Datenleitung zu einem anderen Zeitpunkt und/oder an einem anderen Ort stattfindet, als zu dem Zeitpunkt und/oder an dem Ort der aus der Leitcodierung resultierenden physikalischen Sortierung.

4. Verfahren nach einem oder mehreren der vorgenannten Ansprüche,
**dadurch gekennzeichnet,**
**dass** die Auswertung der graphischen Informationen der Postsendungen eine statistische Auswertung der auf den Postsendungen befindlichen graphischen Informationen beinhaltet.

5. Verfahren nach einem oder mehreren der vorgenannten Ansprüche,
**dadurch gekennzeichnet,**
**dass** eine Echtheitsprüfung einer Absenderfreimachung **dadurch** erfolgt, dass die auf den Postsendungen vorhandenen graphischen Informationen mit den für diese Postsendung erwarteten Informationen verglichen werden, wobei die erwarteten Informationen einer dem Vergleich vorhergehenden Festlegung entsprechen, und ferner im Falle eines Abweichens der vorhandenen Informationen von den erwarteten Informationen, die Freimachung als gefälscht registriert wird.

6. Verfahren nach einem oder mehreren der vorgenannten Ansprüche,
**dadurch gekennzeichnet,**
**dass** eine Echtheitsprüfung einer digitalen Freimachung erfolgt, wobei die in den graphischen Informationen enthaltenen codierten digitalen Informationen dechiffriert und mit auf der zugehörigen Postsendung enthaltenen unverschlüsselten graphischen Informationen auf Übereinstimmung verglichen und im Falle einer Nichtübereinstimmung die Freimachung als gefälscht registriert wird.

7. Verfahren nach Anspruch 6,
**dadurch gekennzeichnet,**
**dass** aus in den graphischen Informationen enthaltenen Daten ein Hash-Wert gebildet wird, um zu überprüfen, ob dieser Hash-Wert mit einem in den codierten Informationen enthaltenen Hash-Wert übereinstimmt und im Falle der Nichtübereinstimmung die Freimachung als gefälscht registriert wird.

8. Verfahren nach Anspruch 7,
**dadurch gekennzeichnet,**
**dass** der Hash-Wert unter Einbeziehung von Angaben über Sendungsdaten, unter Einbeziehung einer zwischengespeicherten Zufallszahl und unter Einbeziehung einer Ladevorgangsidentifikationsnummer gebildet wird.

9. Verfahren nach einem oder mehreren der vorgenannten Ansprüche,
**dadurch gekennzeichnet,**
**dass** die Auswertung der graphischen Informationen der Postsendung nach Sortiermerkmalen erfolgt.

10. Verfahren nach einem oder mehreren der vorgenannten Ansprüche,
**dadurch gekennzeichnet,**
**dass** die Uhrzeit eines Sortierungsereignisses ein Sortiermerkmal der Auswertung ist.

11. Verfahren nach einem oder mehreren der vorgenannten Ansprüche,
**dadurch gekennzeichnet,**
**dass** ein weiteres Sortiermerkmal der Auswertung das Datum eines Sortierungsereignisses ist.

12. Verfahren nach einem oder mehreren der vorgenannten Ansprüche,
**dadurch gekennzeichnet,**
**dass** ein weiteres Sortiermerkmal der Auswertung die Startzeit und/oder Endzeit eines Sortierungsereignisses ist.

13. Verfahren nach einem oder mehreren der vorgenannten Ansprüche,
**dadurch gekennzeichnet,**
**dass** ein weiteres Sortiermerkmal der Auswertung die Spezifikation von Produktionsmaschinen eines Brief- oder Frachtverteilungszentrums ist.

14. Verfahren nach einem oder mehreren der vorgenannten Ansprüche,
**dadurch gekennzeichnet,**
**dass** ein weiteres Sortiermerkmal der durch die Auswertung ermittelte Wert der Unterfrankierung ist.

15. Verfahren nach einem oder mehreren der vorgenannten Ansprüche,
**dadurch gekennzeichnet,**
**dass** ein weiteres Sortiermerkmal die durch die Auswertung ermittelte AFM-Kennung ist.

16. Verfahren nach Anspruch 15,
**dadurch gekennzeichnet,**
**dass** als ein weiteres Sortiermerkmal überprüft wird, ob die AFM-Kennung lesbar ist.

17. Verfahren nach einem oder mehreren der vorgenannten Ansprüche,
**dadurch gekennzeichnet,**
**dass** als ein weiteres Sortiermerkmal überprüft wird, ob die ermittelte AFM-Kennung in einer Negativdatei ist.

18. Verfahren nach einem oder mehreren der vorgenannten Ansprüche,
**dadurch gekennzeichnet,**
**dass** als ein weiteres Sortiermerkmal überprüft wird, ob die ermittelte AFM-Kennung in einer Positivdatei ist.

19. Verfahren nach einem oder mehreren der vorgenannten Ansprüche,
**dadurch gekennzeichnet,**
**dass** als ein weiteres Sortiermerkmal überprüft wird, ob eine AFM Unterfrankierung vorliegt.

20. Verfahren nach einem oder mehreren der vorgenannten Ansprüche,
**dadurch gekennzeichnet,**
**dass** als ein weiteres Sortiermerkmal überprüft wird, ob die AFM Währung lesbar ist.

21. Verfahren nach einem oder mehreren der vorgenannten Ansprüche,
**dadurch gekennzeichnet,**
**dass** als ein weiteres Sortiermerkmal überprüft wird, ob die AFM Freimachung lesbar ist.

22. Verfahren nach einem oder mehreren der vorgenannten Ansprüche,
**dadurch gekennzeichnet,**
**dass** als ein weiteres Sortiermerkmal das Datum einer PCF ("PCF Datum) überprüft wird.

23. Verfahren nach einem oder mehreren der vorgenannten Ansprüche,
**dadurch gekennzeichnet,**
**dass** als ein weiteres Sortiermerkmal überprüft wird, ob eine PCF Version ("PCF Version") vorliegt.

24. Verfahren nach einem oder mehreren der vorgenannten Ansprüche,
**dadurch gekennzeichnet,**
**dass** als ein weiteres Sortiermerkmal überprüft wird, ob eine PCF Unterfrankierung ("PCF Unterfrankierung") vorliegt.

25. Verfahren nach einem oder mehreren der vorgenannten Ansprüche,
**dadurch gekennzeichnet,**
**dass** als ein weiteres Sortiermerkmal überprüft wird, ob eine ermittelte PCF in einer Negativdatei ("PCF in Negativdatei") vorhanden ist.

26. Verfahren nach einem oder mehreren der vorgenannten Ansprüche,
**dadurch gekennzeichnet,**
**dass** eine Speicherung von Daten der automatisierten Freimachungsprüfung erfolgt.

27. Verfahren nach einem oder mehreren der vorgenannten Ansprüche,
**dadurch gekennzeichnet,**
**dass** Ergebnisse der Auswertung von graphischen Informationen in einer Datenbank gespeichert werden.

28. Vorrichtung zur Bearbeitung von auf Postsendungen befindlichen graphischen Informationen mit einer oder mehreren Bildverarbeitungseinheiten, wobei die Bildverarbeitungseinheiten Mittel zur Erfassung, Auswertung und Speicherung der graphischen Informationen von Postsendungen enthalten, und mit mindestens einem Mittel zur Erkennung von unterschiedlichen Freimachungsarten der Postsendungen, wobei sich die Bildverarbeitungseinheiten sowie die Mittel zur Erkennung der Freimachungsarten innerhalb eines Datennetzwerkes befinden,
wobei das Datennetzwerk mit mindestens einem Mittel zur Erzeugung einer physikalischen Sortierung von Postsendungen, mit mindestens einem Mittel zur Erzeugung einer Leitcodierung, und mit mindestens einem Mittel zur Auswertung der graphischen Informationen verbunden ist, so dass das Mittel zur Auswertung der graphischen Informationen einer ersten Postsendung ein erstes Ergebnis der Auswertung bestimmt, wobei das Datennetzwerk ferner mit einer infolge des ersten Ergebnisses der Auswertung der grafischen Informationen um zusätzliche Sortiermerkmale ergänzten Datenbank zur Bestimmung eines zweiten Ergebnisses der Auswertung verbunden ist und zudem mindestens ein Mittel zur Erzeugung der physikalischen Sortierung einer zweiten Postsendung aktiviert wird, wobei eine weitere aus dem Leitcode resultierende physikalische Sortierung der ersten Postsendung erfolgt.

29. Vorrichtung nach Anspruch 28,
**dadurch gekennzeichnet,**
**dass** sich mindestens ein Mittel zur Auswertung der graphischen Informationen der Postsendungen innerhalb und/oder außerhalb eines Briefverteilungszentrums befindet.

30. Vorrichtung nach einem oder beiden der Ansprüche 28 und 29,
**dadurch gekennzeichnet,**
**dass** mindestens ein Mittel zur Auswertung der graphischen Informationen der Postsendungen über mindestens ein Eingabegerät sowie über mindestens ein Anzeigegerät verfügt, so dass Auswerteergebnisse sowie Videodaten der Oberflächen der Postsendungen einem Anwender dargestellt und mittels des Eingabegeräts vom Anwender nachbearbeitet werden.

31. Vorrichtung nach Anspruch 30,
**dadurch gekennzeichnet,**
**dass** konventionelle analoge und/oder digitale videotechniken als Anzeigegeräte verwendet werden.

32. Vorrichtung nach einem oder beiden der vorgenannten Ansprüche 30 oder 31,
**dadurch gekennzeichnet,**
**dass** PC-basierte Anzeigegeräte eingesetzt werden, die eine Filterung der Videodaten und somit eine Detaildarstellung spezieller Segmente der Videodaten ermöglichen.

33. Vorrichtung nach Anspruch 30,
**dadurch gekennzeichnet,**
**dass** die Eingabegeräte aus PC-Tastaturen, numerischen Tastenblöcken, Barcode-Scannern und/oder Mitteln zur Sprachanalyse bestehen.

## Claims

1. A method for processing graphic information present on mailpieces, the graphic information being acquired, evaluated and stored, and the acquired graphic information being used for physically sorting mailpieces,
wherein on the basis of a first result of the evaluation of the graphic information, a database is augmented by additional sorting features, and the surface video data contained in the graphic information and/or the statistical evaluation are stored, and moreover, on the basis of the augmented database, a second result of the evaluation is ascertained so that, on the basis of the results of the evaluation, the graphic information of a first mailpiece is sorted, this sorting of the graphic information of the first mailpiece triggering a physical sorting of a second mailpiece, and wherein furthermore, another physical sorting of the first mailpiece resulting from a reference code is carried out.

2. The method according to claim 1, **characterized in that** a determination of postage indicia present on the mailpieces is carried out.

3. The method according to one or more of the preceding claims, **characterized in that** the evaluation of the graphic information takes place via a data line at a different point in time and/or at a different place than the point in time and/or the place of the physical sorting resulting from the reference code.

4. The method according to one or more of the preceding claims, **characterized in that** the evaluation of the graphic information of the mailpieces comprises a statistical evaluation of the graphic information present on the mailpieces.

5. The method according to one or more of the preceding claims, **characterized in that** the authenticity of sender franking is verified **in that** the graphic information present on the mailpieces is compared to the information expected for this mailpiece, the expected information corresponding to a determination that preceded the comparison, and moreover, the postage indicium is registered as being forged if the information at hand differs from the expected information.

6. The method according to one or more of the preceding claims, **characterized in that** the authenticity of a digital postage indicium is verified, whereby the encoded digital information contained in the graphic information is deciphered and compared to the unencrypted graphic information present on the appertaining mailpiece to see if it matches and, if it does not match, the postage indicium is registered as being forged.

7. The method according to claim 6, **characterized in that** a hash value is generated from data contained in the graphic information in order to check whether this hash value matches a hash value contained in the encoded information and, if it does not match, the postage indicium is registered as being forged.

8. The method according to claim 7, **characterized in that** the hash value is formed taking into account information about mailpiece data, taking into account a temporarily stored random number and taking into account a loading procedure identification number.

9. The method according to one or more of the preceding claims, **characterized in that** the evaluation of the graphic information of the mailpiece is carried out according to sorting features.

10. The method according to one or more of the preceding claims, **characterized in that** the time of day of a sorting event is a sorting feature of the evaluation.

11. The method according to one or more of the preceding claims, **characterized in that** another sorting feature of the evaluation is the date of a sorting event.

12. The method according to one or more of the preceding claims, **characterized in that** another sorting feature of the evaluation is the starting time and/or the ending time of a sorting event.

13. The method according to one or more of the preceding claims, **characterized in that** another sorting feature of the evaluation is the specification of production machines in a mail or freight distribution center.

14. The method according to one or more of the preceding claims, **characterized in that** another sorting feature is the value of the insufficient postage determined by means of the evaluation.

15. The method according to one or more of the preceding claims, **characterized in that** another sorting feature is the AFM identification determined by means of the evaluation.

16. The method according to claim 15, **characterized in that** as another sorting feature, it is checked whether the AFM identification is readable.

17. The method according to one or more of the preceding claims, **characterized in that** as another sorting feature, it is checked whether the determined AFM identification is present in a negative file.

18. The method according to one or more of the preceding claims, **characterized in that** as another sorting feature, it is checked whether the determined AFM identification is present in a positive file.

19. The method according to one or more of the preceding claims, **characterized in that** as another sorting feature, it is checked whether this is a case of AFM insufficient postage.

20. The method according to one or more of the preceding claims, **characterized in that** as another sorting feature, it is checked whether the AFM currency is readable.

21. The method according to one or more of the preceding claims, **characterized in that** as another sorting feature, it is checked whether the AFM postage indicium is readable.

22. The method according to one or more of the preceding claims, **characterized in that** as another sorting feature, the date of a PCF ("PCF date") is checked.

23. The method according to one or more of the preceding claims, **characterized in that** as another sorting feature, it is checked whether a PCF version ("PCF version") is present.

24. The method according to one or more of the preceding claims, **characterized in that** as another sorting feature, it is checked whether PCF insufficient postage ("PCF insufficient postage") is present.

25. The method according to one or more of the preceding claims, **characterized in that** as another sorting feature, it is checked whether a determined PCF is present in a negative file ("PCF in negative file").

26. The method according to one or more of the preceding claims, **characterized in that** data of the automated checking of the postage is stored.

27. The method according to one or more of the preceding claims, **characterized in that** results of the evaluation of graphic information are stored in a database.

28. A device for processing graphic information present on the surfaces of mailpieces comprising one or more image processing units, the image processing units including means for acquiring, evaluating and storing the graphic information of mailpieces, and comprising at least one means for recognizing different types of postage of the mailpieces, the image processing units and the means for recognizing the types of postage being in a data network,
wherein the data network is connected to at least one means for performing a physical sorting of mailpieces, at least one means for generating a reference code, and at least one means for evaluating the graphic information, so that the means for evaluating the graphic information of a first mailpiece ascertains a first result of the evaluation, and the data network is also connected to a database, for determining a second result of the evaluation and additionally the database having been augmented by an additional sorting feature on the basis of the first result of the evaluation of the graphic information, at least one means for performing the physical sorting of a second mailpiece is activated, and another physical sorting of the first mailpiece is carried out on the basis of the reference code.

29. The device according to claim 28, **characterized in that** at least one means for evaluating the graphic information of the mailpieces is located inside and/or outside of a mail distribution center.

30. The device according to one or both of claims 28 and 29, **characterized in that** at least one means for evaluating the graphic information of the mailpieces has at least one input device as well as at least one display device so that evaluation results as well as surface video data of the mailpieces are displayed to a user and edited by the user employing the input device.

31. The device according to claim 30, **characterized in that** conventional analog and/or digital video equipment is used as display devices.

32. The device according to one or both of the preceding claims 30 or 31, **characterized in that** PC-based display devices are used that allow a filtering of the video data and thus a detailed depiction of specific segments of the video data.

33. The device according to claim 30, **characterized in that** the input devices consist of PC keyboards, numerical keypads, barcode scanners and/or means for speech recognition.

## Revendications

1. Procédé pour traiter des informations graphiques figurant sur des envois postaux, les informations graphiques étant détectées, évaluées et stockées et les informations graphiques détectées étant utilisées aux fins du tri physique d'envois postaux,
dans lequel une base de données est complétée par des critères de tri supplémentaires à la suite d'un premier résultat de l'évaluation des informations graphiques et dans lequel les données vidéo de la surface contenues dans les informations graphiques et/ou l'évaluation statistique sont sauvegardées et une détermination d'un deuxième résultat de l'évaluation est effectuée à l'aide de la base de données complétée de sorte que les informations graphiques d'un premier envoi postal sont triées à la suite des résultats de l'évaluation et un tri physique d'un deuxième envoi postal étant déclenché au moyen du tri des informations graphiques du premier envoi postal et dans lequel un autre tri physique du premier envoi postal, résultant d'un code de référence, est en outre effectué.

2. Procédé selon la revendication 1, **caractérisé en ce qu'**une détermination d'affranchissements figurant sur les envois postaux est effectuée.

3. Procédé selon l'une ou plusieurs des revendications précédentes, **caractérisé en ce que** l'évaluation des informations graphiques au moyen d'une ligne de données a lieu à un autre instant et/ou à un autre endroit qu'à l'instant et/ou à l'endroit du tri physique résultant du code de référence.

4. Procédé selon l'une ou plusieurs des revendications précédentes, **caractérisé en ce que** l'évaluation des informations graphiques des envois postaux contient une évaluation statistique des informations graphiques figurant sur les envois postaux.

5. Procédé selon l'une ou plusieurs des revendications précédentes, **caractérisé en ce qu'**une vérification de l'authenticité d'un affranchissement d'expéditeur est effectuée par comparaison des informations graphiques figurant sur les envois postaux avec les informations attendues pour cet envoi postal, les informations attendues correspondant à ce qui a été fixé préalablement à la comparaison et, en cas d'écart entre les informations présentes et les informations attendues, l'affranchissement étant, en outre, enregistré comme étant une contrefaçon.

6. Procédé selon l'une ou plusieurs des revendications précédentes, **caractérisé en ce qu'**une vérification de l'authenticité d'un affranchissement numérique est effectuée, les informations numériques codées contenues dans les informations graphiques étant déchiffrées et comparées avec des informations graphiques non chiffrées figurant sur l'envoi postal associé pour établir leur conformité avec celles-ci et l'affranchissement étant enregistré comme étant une contrefaçon en cas de non-conformité.

7. Procédé selon la revendication 6, **caractérisé en ce qu'**une valeur de hachage est constituée à partir de données contenues dans les informations graphiques pour vérifier si cette valeur de hachage est conforme à une valeur de hachage contenue dans les informations codées et l'affranchissement est enregistré comme étant une contrefaçon en cas de non-conformité.

8. Procédé selon la revendication 7, **caractérisé en ce que** la valeur de hachage est constituée compte tenu d'indications relatives aux données de l'envoi, compte tenu d'un nombre aléatoire stocké temporairement et compte tenu d'un numéro d'identification d'opération de chargement.

9. Procédé selon l'une ou plusieurs des revendications précédentes, **caractérisé en ce que** l'évaluation des informations graphiques de l'envoi postal est effectuée selon des critères de tri.

10. Procédé selon l'une ou plusieurs des revendications précédentes, **caractérisé en ce que** l'heure d'un événement de tri est un critère de tri aux fins de l'évaluation.

11. Procédé selon l'une ou plusieurs des revendications précédentes, **caractérisé en ce qu'**un autre critère de tri aux fins de l'évaluation est la date d'un événement de tri.

12. Procédé selon l'une ou plusieurs des revendications précédentes, **caractérisé en ce qu'**un autre critère de tri aux fins de l'évaluation est l'instant initial et/ou l'instant final d'un événement de tri.

13. Procédé selon l'une ou plusieurs des revendications précédentes, **caractérisé en ce qu'**un autre critère de tri aux fins de l'évaluation est la spécification de machines de production d'un centre de distribution de courrier ou de fret.

14. Procédé selon l'une ou plusieurs des revendications précédentes, **caractérisé en ce qu'**un autre critère de tri est la valeur du sous-affranchissement déterminée par l'évaluation.

15. Procédé selon l'une ou plusieurs des revendications précédentes, **caractérisé en ce qu'**un autre critère de tri est l'identifiant de machine à affranchir déterminé par l'évaluation.

16. Procédé selon la revendication 15, **caractérisé en ce qu'**il est vérifié, en tant qu'autre critère de tri, si l'identifiant de machine à affranchir est lisible.

17. Procédé selon l'une ou plusieurs des revendications précédentes, **caractérisé en ce qu'**il est vérifié, en tant qu'autre critère de tri, si l'identifiant de machine à affranchir qui a été déterminé se trouve dans un fichier négatif.

18. Procédé selon l'une ou plusieurs des revendications précédentes, **caractérisé en ce qu'**il est vérifié, en tant qu'autre critère de tri, si l'identifiant de machine à affranchir qui a été déterminé se trouve dans un fichier positif.

19. Procédé selon l'une ou plusieurs des revendications précédentes, **caractérisé en ce qu'**il est vérifié, en tant qu'autre critère de tri, s'il y a sous-affranchissement par machine à affranchir.

20. Procédé selon l'une ou plusieurs des revendications précédentes, **caractérisé en ce qu'**il est vérifié, en tant qu'autre critère de tri, si la devise de machine à affranchir est lisible.

21. Procédé selon l'une ou plusieurs des revendications précédentes, **caractérisé en ce qu'**il est vérifié, en tant qu'autre critère de tri, si l'affranchissement par machine à affranchir est lisible.

22. Procédé selon l'une ou plusieurs des revendications précédentes, **caractérisé en ce que** la date d'un affranchissement informatique (« date d'affranchissement automatique ») est vérifiée en tant qu'autre critère de tri.

23. Procédé selon l'une ou plusieurs des revendications précédentes, **caractérisé en ce qu'**est vérifiée, en tant qu'autre critère de tri, la présence d'une version d'affranchissement informatique (« version d'affranchissement informatique »).

24. Procédé selon l'une ou plusieurs des revendications précédentes, **caractérisé en ce qu'**est vérifiée, en tant qu'autre critère de tri, la présence d'un sous-affranchissement informatique (« sous-affranchissement informatique »).

25. Procédé selon l'une ou plusieurs des revendications précédentes, **caractérisé en ce qu'**est vérifiée, en tant qu'autre critère de tri, la présence, dans un fichier négatif, d'un affranchissement informatique qui a été déterminé (« affranchissement informatique dans un fichier négatif »).

26. Procédé selon l'une ou plusieurs des revendications précédentes, **caractérisé en ce qu'**il y a mise en mémoire de données du contrôle automatisé de l'affranchissement.

27. Procédé selon l'une ou plusieurs des revendications précédentes, **caractérisé en ce que** les résultats de l'évaluation d'informations graphiques sont stockés dans une base de données.

28. Dispositif pour traiter des informations graphiques figurant sur des envois postaux, avec une ou plusieurs unités de traitement d'images, les unités de traitement d'images contenant des moyens pour détecter, évaluer et stocker les informations graphiques d'envois postaux, et avec au moins un moyen pour identifier différents types d'affranchissements des envois postaux, les unités de traitement d'images et les moyens d'identification des types d'affranchissements se trouvant dans un réseau de données,
dans lequel le réseau de données est relié à au moins un moyen pour produire un tri physique d'envois postaux, à au moins un moyen pour produire un code de référence et à au moins un moyen pour évaluer les informations graphiques de sorte que le moyen d'évaluation des informations graphiques d'un premier envoi postal détermine un premier résultat de l'évaluation, le réseau de données étant en outre relié à une base de données complétée par des critères de tri supplémentaires à la suite du premier résultat de l'évaluation des informations graphiques pour déterminer un deuxième résultat de l'évaluation, et dans lequel au moins un moyen pour produire un tri physique d'un deuxième envoi postal est en outre activé, un autre tri physique du premier envoi postal, résultant du code de référence, étant effectué.

29. Dispositif selon la revendication 28, **caractérisé en ce qu'**au moins un moyen d'évaluation des informations graphiques des envois postaux se trouve dans et/ou en dehors d'un centre de distribution de courrier.

30. Dispositif selon l'une ou les deux revendications 28 et 29, **caractérisé en ce qu'**au moins un moyen d'évaluation des informations graphiques des envois postaux dispose d'au moins un appareil de saisie ainsi que d'au moins un appareil d'affichage en sorte que des résultats d'évaluation ainsi que des données vidéo des surfaces des envois postaux peuvent être représentés pour un utilisateur et post-traités par l'utilisateur au moyen de l'appareil de saisie.

31. Dispositif selon la revendication 30, **caractérisé par** l'utilisation, en tant qu'appareils d'affichage, de techniques vidéo conventionnelles analogiques et/ou numériques.

32. Dispositif selon l'une ou les deux revendications précédentes 30 ou 31, **caractérisé en ce que** sont mis en oeuvre des appareils d'affichage basés sur des ordinateurs, lesquels permettent un filtrage des données vidéo et donc une représentation détaillée de segments spéciaux des données vidéo.

33. Dispositif selon la revendication 10, **caractérisé en ce que** les appareils de saisie consistent en des claviers d'ordinateurs, des blocs de touches numériques, des scanners de codes-barres et/ou des moyens d'analyse vocale.
